# EUROPEAN PATENT SPECIFICATION

(11) **EP 3 334 591 B1**
(45) Date of publication and mention of the grant of the patent: **03.11.2021**
(21) Application number: 16758007.5
(22) Date of filing: 10.08.2016
(51) Int. Cl.: B29C 70/02, B32B 5/22, B32B 5/24, B32B 5/08, B32B 5/26, B32B 37/15, B32B 38/08

(54) **PREPREG MATERIAL CAPABLE OF PROVIDING LIGHTNING STRIKE PROTECTION AND BURN-THROUGH RESISTANCE AND METHOD FOR ITS MANUFACTURE**
PREPREG-MATERIAL FÜR BLITZSCHLAGSCHUTZ UND DURCHBRENNRESISTENZ UND VERFAHREN ZU DESSEN HERSTELLUNG
MATÉRIAU PRÉ-IMPRÉGNÉ CAPABLE D'ASSURER UNE PROTECTION CONTRE LE FOUDROIEMENT ET DE RÉSISTER AUX BRÛLURES PERFORANTES ET PROCÉDÉ POUR SA FABRICATION

(30) Priority: 10.08.2015 US 201562203021 P
(43) Date of publication of application: 20.06.2018
(73) Proprietor: Cytec Industries Inc., Princeton, NJ 08540 (US)
(72) Inventor: LENZI, Fiorenzo, 81041 Vitulazio (CE) (IT)
(74) Representative: Lederer & Keller Patentanwälte Partnerschaft mbB
(86) International application number: PCT/US2016/046311
(87) International publication number: WO 2017/027569

(56) References cited:
- WO-A1-2008/056123
- WO-A1-2011/060421

## Description

### BACKGROUND

Fire is a major safety hazard for commercial aircrafts. In-flight fire has been ranked as one of the highest known contributing causes of fatalities arising from accidents involving commercial jet aircrafts.

All non-metallic materials used inside the pressure vessel of commercial aircrafts are subject to flammability regulations in many countries. The heat, smoke and gases released by a burning composite and the degradation in structural integrity can quickly jeopardize the safety of an aircraft.

It is highly desirable that composite materials used in aircraft structures and mainly in fuselage structures can provide improved burn-through protection comparing to state-of-art composite materials. It is also highly desirable to have a multi-functional protective top surfacing layer or a layer near to the top of a composite structure that can simultaneously satisfy burn-through requirement and lightning strike protection of a composite fuselage structure.

WO 2011/060421 discloses the features of the preambles of claims 1 and 9 respectively.

### BRIEF DESCRIPTION OF THE DRAWINGS

**FIG. 1** is a schematic illustration of an exemplary cured composite panel before exposure to fire (left view) and after exposure to fire (right view), according to an embodiment of the present disclosure.
**FIG. 2** schematically illustrates the set-up for Burn-through tests.
**FIG. 3** schematically illustrates the set-up for fire-under-compression load tests.
**FIG. 4** is a micrograph of a thermally expandable and electrically conductive fiber layer.
**FIG. 5** shows results of a Burn-through test on a Control panel: temperatures vs time at panel "cold face" and "hot face".
**FIG. 6** is a micrograph of the top layer of a cured composite panel, according to an embodiment of the present disclosure.
**FIG. 7** shows comparative Burn-through test results: temperatures vs time at panel "cold face".
**FIGS. 8A** and **8B** show photos of a Control panel after Lightning Strike test in zone 2A.
**FIGS. 9A** and **9B** show photos of a Control panel after Lightning Strike test in zone 1A.
**FIGS. 10A** and **10B** show photos of a cured composite panel after Lightning Strike test in zone 2A, according to an example.
**FIGS. 11A** and **11B** show photos of a cured composite panel after Lightning Strike in zone 1A, according to an example.
**FIG. 12** shows the micrograph of a cured composite panel manufactured by resin infusion according to one embodiment of the present disclosure.

### DETAILED DESCRIPTION

Historically, aircraft fuselage structures were made of aluminum that provided burn-through resistance not greater than 60 seconds if exposed to flames generated outside the aircraft. As such, after this period of time, it is possible for flames to enter the skin and propagates inside the cabin. In some countries, specific fire barrier insulation materials are required for airplanes with a passenger capacity of 20 or greater, for the lower half of the passenger fuselage. The intent is to provide a fuselage structure having a burn-through protection time of 5 minutes for the penetration of an external fuel fire into an aircraft cabin after crash.

The adoption of carbon composite fuselages with enhanced burn-through protection may provide significant benefits comparing to the above state-of-the art burn-through resistant insulation materials, including weight savings and reduced costs for the airframe manufacturers.

Some materials such as thermal insulators, if applied as outer layers of aircrafts composite structures, could potentially provide protection against an external fuel fire. Thermal insulating layers may delay the temperature rise and reduce the heat transfer through the fuselage. Such insulating layers typically contain a thermoset resin and thermal insulating fibers (e.g., glass/mineral wool). However, if used inside the fuselage wall, such insulating layers do not provide complete protection of the aircraft cabin from an external fire, thereby exposing the cabin structure to potential collapse under the fuselage's own weight. Moreover, this is not the most cost beneficial method of achieving the safety intended. Also, such insulating layers are associated with significant increase in weight. Furthermore, thermal insulating layers applied to the exterior surface of a fuselage skin reduce the electrical conductivity of fuselage surface and then its lightning strike protection.

One aspect of the present disclosure is pertaining to a composite panel that can provide a burn-through protection time of at least 5 minutes for the penetration of an external fuel fire into an aircraft cabin after crash, so that no additional burn-through resistant insulation materials are required in the aircraft fuselage, and at the same time, also satisfy lightning strike protection of the fuselage without any additional protection or material.

Another aspect of the present disclosure is pertaining to a prepreg material to be used as a protective material of a composite structure or component to provide simultaneously burn-through resistance and lightning strike protection (LSP). This prepreg material, referred hereafter as "protective prepreg material", includes:
(A) electrically conductive fibers;
(B) thermally expandable particles; and
(C) a curable matrix resin,
wherein the electrically conductive fibers and the thermally expandable particles are embedded in the curable matrix resin, wherein the thermoset resin component of the curable resin composition constitutes from 30% to 50% of the composition by weight.

According to a preferred embodiment of the present disclosure, the prepreg material disclosed herein may be used as protective material of a fuselage structure to simultaneously provide its burn-through resistance and lightning strike protection (LSP).

The main advantages of the resulting fuselage construction, comparing to state-of-the art solutions are:
- Complete and continuous coverage of the fuselage skin with no discontinuities.
- No requirement for complex internal fire protection barriers.
- Weight savings since no burn-through resistant insulation materials are mandatory inside the fuselage wall.
- Integrated lightning strike protection and electromagnetic shielding capabilities.

Preferably, the electrically conductive fibers are in the form of a nonwoven mat (hereafter referred to as "mat") and the thermally expandable particles are incorporated into or dispersed throughout the mat, thereby forming a thermally expandable and electrically conductive fiber layer (hereafter referred to as "expandable, conductive fiber layer"). This fiber layer also contains a small amount of polymeric binder in sufficient amount to hold the fibers together and to maintain the integrity of the mat. The expandable, conductive fiber layer is impregnated or infused with a curable thermoset resin composition to form the protective prepreg material.

The protective prepreg material may be fabricated by a conventional film-impregnation process which includes pressing a curable resin film onto one side of the thermally expandable and conductive fiber layer (or nonwoven mat) using heat and pressure so as to cause resin impregnation. The amount of heat applied is sufficient to melt the resin but is not high enough to cure the resin.

The protective prepreg material of the present disclosure is suitable for incorporation into the primary and secondary structures of aircrafts, including, but not limited to, fuselage, wings, and nacelles. Furthermore, the use of such protective prepreg material as a surfacing layer at the top of or near the top of a composite structure can provide improved burn-through resistance, LSP and electromagnetic shielding capabilities.

### Thermally Expandable and Electrically Conductive Fiber Layer

The electrically conductive fibers in the expandable, conductive fiber layer are electrically conductive fibers composed of any suitable conductive material having an electrical conductivity of at least 1 × 10⁴ S/m. The electrically conductive fibers may be coated or not-coated fibers.

In a preferred embodiment, the electrically conductive fibers in the expandable, conductive fiber layer are metal-coated fibers, and more preferably, metal-coated carbon fibers. The metal coating may be composed of any suitable metal including, but are not limited to, silver, gold, platinum, palladium, nickel, copper, lead, tin, aluminum, titanium, alloys and mixtures thereof.

In a preferred embodiment, the electrically conductive fibers are in the form of a non-woven mat composed of intermingled, randomly arranged fibers. And the thermally expandable particles are incorporated into or dispersed throughout the mat.

The expandable, conductive fiber layer may have an areal weight within the range of 50 gsm to 350 gsm (grams per square meter). Preferably, the expandable, conductive fiber layer has an areal weight of at least 50 gsm for LSP of aircraft 2A zones and at least 125gsm for LSP of aircraft 1A zones. The expandable, conductive fiber layer constitutes from 40% to 75% by weight of the protective prepreg material, preferably from about 50% to 70% by weight.

It is desirable that the expandable, conductive fiber layer has a sufficient amount of polymeric binder to hold the metal-coated fibers together but the binder amount is small enough to leave the resulting fiber layer porous or permeable to the curable resin. To that end, the amount of binder is less than 25 wt% based on the total weight of the expandable, conductive fiber layer (i.e., fibers plus expandable particles and binder), and preferably from 10 wt% to 20 wt% based on the total weight of the expandable, conductive fiber layer. Typical binders include poly vinyl alcohol (PVA), polyester, polyester, styrene acrylic, vinyl-acrylic, epoxy, phenoxy, polyurethanes, polyamides, acrylates, combinations, hybrids and copolymers thereof.

The thermally expandable particles are the particulate form of an intumescent material which expands upon exposure to high temperatures. In a preferred embodiment, the thermally expandable particles start expansion at a temperature above the curing temperature of the curable thermoset resin in the protective prepreg material. Thus, the expandable particles do not expand during the curing cycle of the thermoset resin which surrounds the particles. In a preferred embodiment, the expandable particles are characterized by an onset temperature (i.e. expansion temperature at which the particles start to expand) of 20°C to 100°C above the curing temperature. As an example, when the thermoset resin's curing temperature is 180°C, the thermally expandable particles start expanding at temperature above 180°C, preferably, in the range 200°C-250°C.

The term "particles" as used herein encompass particulate materials of various shapes including, but are not limited to, spherical and non-spherical particles, and flakes. The thermally expandable particles can be formed from any suitable intumescent material, including, but not limited to, hydrated alkali metal silicates, Aluminum trihydrate, melamine, Ammonium Polyphosphate, combination thereof, and known materials that are only expandable in a single direction, such as expandable graphite.

In a preferred embodiment, the expandable particles are expandable graphite flakes. Expandable graphite flakes can be distinguished from ordinary graphite, since this is a form of flake graphite that has been intercalated with various forms of reagents. The expandable graphite possesses unique exfoliative properties upon heating - swelling or expanding to many times its initial volume. The degree of expansion may be up to 400 times (measured as bulk density) of its pre-expanded density.

In a preferred embodiment, the expandable particles may have sizes in the range of 10-500 microns as determined by U.S. mesh size 35 to 1250.

For spherical particles (with aspect ratio of approximately 1:1), the particle size refers to its diameter. For non-spherical particles, the particle size refers to the largest cross sectional dimension of the particles.

Exemplary graphite particles that may be used include NYAGRAPH® grades from Nyacol Nano Technologies, Inc, Ashland, MA, USA, Signature Graphite 7800B from Superior Graphite Co. of Chicago III., and GRAFGUARD® grades commercially available from GrafTech International Lakewood Ohio.

In a preferred embodiment, the expandable graphite flakes have an onset temperature in the range of 200°C and 250°C. The onset temperature defines the temperature at which a material begins to expand. GRAFGUARD 220-50 grade is an exemplary grade of expandable graphite flake having an onset temperature of about 220°C and a particle size of about 350 microns (65% on U.S. 50 mesh nominal).

The expandable particles may be present in an amount of from 20% to 60 % by weight, preferably, from 30% to 50% by weight, based on the total weight of the expandable, conductive fiber layer (i.e., fibers plus expandable particles and binder).

The conductive nonwoven fiber layer with thermally expandable particles discussed above may be produced by a conventional wet-laying process, as an example. Preferably, the conductive fibers are chopped before being used in the wet-laying process. As an example, the conductive fibers may be chopped to dimensions (lengthwise) in the range of 5 mm - 50 mm, more preferably, 10 mm - 20 mm.

In a conventional wet-laying process, chopped fibers are dispersed in a water slurry that contains a binder and expandable particles. The slurry is agitated so that the fibers become dispersed. Then the slurry containing the fibers is deposited onto a moving screen where a substantial portion of the water is removed to form a web. The resulting fiber layer is dried to remove the remaining water. The formed fiber layer is an assembly of dispersed, individual fiber filaments and particles arranged in random orientation. Wet-laying processes are typically used when a uniform distribution of fibers and/or weight is desired.

In one embodiment, the expandable, conductive fiber layer consists of chopped conductive fibers, thermally expandable particles, and highly conductive particles to further improve the electrical conductivity of the fiber layer.

In certain embodiments, the morphology of the additional conductive particles may include one or more of flakes, powders, fibers, wires, microspheres, singly or in combination. Non-expandable graphite, metals and metal alloys may be employed as effective conductive particles, owing to their relatively high electrical conductivity.

Preferably the additional conductive particles are metal flakes or metal coated flakes. Examples of metals and alloys for use with embodiments of the present disclosure may include, but are not limited to, silver, gold, nickel, copper, aluminum, and alloys and mixtures thereof. In certain embodiments, precious metals, such as gold and silver, may be employed due to their stability (e.g., resistance to oxidation) and effectiveness.

In a particular embodiment, the metal may be silver flakes present in a concentration up to 50% on the basis of the total weight of the expandable, conductive fiber layer composition.

### Curable Thermoset Resin

The curable thermoset resin composition in the protective prepreg material contains one or more thermoset resins. The thermoset resin component of the curable resin composition constitutes from about 30% to about 50% of the composition by weight.

In preferred embodiments, the curable resin composition is curable within the range of from 120°C to 200°C. The curable resin composition is curable in the range of 170 °C - 190 °C according to a preferred embodiment.

The curable resin composition in the protective prepreg material is preferably a hardenable or thermosettable resin containing one or more uncured thermoset resins, which include, but are not limited to, epoxy resins, imides (such as polyimide or bismaleimide), vinyl ester resins, cyanate ester resins, isocyanate modified epoxy resins, phenolic resins, furanic resins, benzoxazines, formaldehyde condensate resins (such as with urea, melamine or phenol), polyesters, acrylics, hybrids, blends and combinations thereof. In one embodiment, the curable thermoset resin composition contains one or more multifunctional epoxy resins.

Suitable epoxy resins include polyglycidyl derivatives of aromatic diamine, aromatic mono primary amines, aminophenols, polyhydric phenols, polyhydric alcohols, polycarboxylic acids. Examples of suitable epoxy resins include polyglycidyl ethers of the bisphenols such as bisphenol A, bisphenol F, bisphenol C, bisphenol S and bisphenol K; and polyglycidyl ethers of cresol and phenol based novolacs.

Specific examples are tetraglycidyl derivatives of 4,4'-diaminodiphenylmethane (TGDDM), resorcinol diglycidyl ether, triglycidyl-p-aminophenol, triglycidyl-m-aminophenol, bromobisphenol F diglycidyl ether, tetraglycidyl derivatives of diaminodiphenylmethane, trihydroxyphenyl methane triglycidyl ether, polyglycidylether of phenol-formaldehyde novolac, polyglycidylether of o-cresol novolac or tetraglycidyl ether of tetraphenylethane.

Commercially available epoxy resins include N,N,N',N'-tetraglycidyl diamino diphenylmethane (e.g. MY 9663, MY 720, and MY 721 from Huntsman); N,N,N',N'-tetraglycidyl-bis(4-aminophenyl)-1,4-diiso-propylbenzene (e.g. EPON 1071 from Momentive); N,N,N',N'-tetraclycidyl-bis(4-amino-3,5-dimethylphenyl)-1,4-diisopropylbenzene, (e.g. EPON 1072 from Momentive); triglycidyl ethers of p-aminophenol (e.g. MY 0510 from Hunstman); triglycidyl ethers of m-aminophenol (e.g. MY 0610 from Hunstman); diglycidyl ethers of bisphenol A based materials such as 2,2-bis(4,4'-dihydroxy phenyl) propane (e.g. DER 661 from Dow, or EPON 828 from Momentive, and Novolac resins preferably of viscosity 8-20 Pa·s at 25°C; glycidyl ethers of phenol Novolac resins (e.g. DEN 431 or DEN 438 from Dow); di-cyclopentadiene-based phenolic novolac (e.g. Tactix 556 from Huntsman); diglycidyl 1,2-phthalate (e.g. GLY CEL A-100); diglycidyl derivative of dihydroxy diphenyl methane (Bisphenol F) (e.g. PY 306 from Huntsman). Other suitable epoxy resins include cycloaliphatics such as 3',4'-epoxycyclohexyl-3,4-epoxycyclohexane carboxylate (e.g. CY 179 from Huntsman).

Generally, the curable thermoset resin composition contains other additives such as curing agents, curing catalysts, co-monomers, rheology control agents, tackifiers, inorganic or organic fillers, thermoplastic and/or elastomeric polymers as toughening agents, UV stabilizers/additives, viscosity modifiers/flow control agents, stabilizers, inhibitors, pigments, dyes, flame retardants, reactive diluents, and other additives well known to those skilled in the art for modifying the properties of the matrix resin before or after curing.

Suitable toughening agents for the curable resin composition include but are not limited to homopolymers or copolymers either alone or in combination of polyamides, copolyamides, polyimides, aramids, polyketones, polyetherimides (PEI), polyetherketones (PEK), polyetherketoneketone (PEKK), polyetheretherketones (PEEK), polyethersulfones (PES), polyetherethersulfones (PEES), polyesters, polyurethanes, polysulphones, polysulphides, polyphenylene oxide (PPO) and modified PPO, poly(ethylene oxide) (PEO) and polypropylene oxide, polystyrenes, polybutadienes, polyacrylates, polymethacrylates, polyacrylics, polyphenylsulfone, high performance hydrocarbon polymers, liquid crystal polymers, elastomers and segmented elastomers.

The curable resin composition may also include polymeric micron-sized toughening particles including particulate thermoplastic polymers selected from: polyarylsulfones, e.g. polyethersulfone (PES), polyetherethersulfone (PEES), polyetherimide (PEI) and polyimides (PI).

The curable resin composition may also include toughening particles having a core-shell structure. Such particles generally have a core comprised of a polymeric material having elastomeric or rubbery properties (i.e., a glass transition temperature less than about 0° C., e.g., less than about -30° C.) surrounded by a shell comprised of a non-elastomeric polymeric material (i.e., a thermoplastic or thermoset/crosslinked polymer having a glass transition temperature greater than ambient temperatures, e.g., greater than about 50° C.). For example, the core may be comprised of, for example, a diene homopolymer or copolymer (for example, a homopolymer of butadiene or isoprene, a copolymer of butadiene or isoprene with one or more ethylenically unsaturated monomers such as vinyl aromatic monomers, (meth)acrylonitrile, (meth)acrylates, or the like) while the shell may be comprised of a polymer or copolymer of one or more monomers such as (meth)acrylates (e.g., methyl methacrylate), vinyl aromatic monomers (e.g., styrene), vinyl cyanides (e.g., acrylonitrile), unsaturated acids and anhydrides (e.g., acrylic acid), (meth)acrylamides, and the like having a suitably high glass transition temperature. The polymer or copolymer used in the shell may have acid groups that are crosslinked ionically through metal carboxylate formation (e.g., by forming salts of divalent metal cations). The shell polymer or copolymer could also be covalently crosslinked through the use of monomers having two or more double bonds per molecule. Other elastomeric polymers may also be suitably be used for the core, including polybutylacrylate or polysiloxane elastomer (e.g., polydimethylsiloxane, particularly crosslinked polydimethylsiloxane). The particle may be comprised of more than two layers (e.g., a central core of one elastomeric material may be surrounded by a second core of a different elastomeric material or the core may be surrounded by two shells of different composition or the particle may have the structure soft core, hard shell, soft shell, hard shell). In some embodiments, the toughening particles having a core-shell structure are relatively small in size. For example, the particle size may be from about 30 nm to about 300 nm as determined by laser scattering technique using a laser scattering particle size distribution analyzer.

Preferably, the curable resin composition also includes a curing agent. The curing agent is suitably selected from known curing agents, for example, aromatic or aliphatic amines, or guanidine derivatives. Particular examples are 3,3'- and 4-,4'-diaminodiphenylsulphone (DDS); methylenedianiline; bis(4-amino-3,5-dimethylphenyl)-1,4-diisopropylbenzene; bis(4-aminophenyl)-1,4-diisopropylbenzene; 4,4'methylenebis-(2,6-diethyl)-aniline (MDEA from Lonza); 4,4'methylenebis-(3-chloro, 2,6-diethyl)-aniline (MCDEA from Lonza); 4,4'methylenebis-(2,6-diisopropyl)-aniline (M-DIPA from Lonza); 3,5-diethyl toluene-2,4/2,6-diamine (D-ETDA 80 from Lonza); 4,4'methylenebis-(2-isopropyl-6-methyl)-aniline (M-MIPA from Lonza); 4-chlorophenyl-N,N-dimethyl-urea (e.g. Monuron); 3,4-dichlorophenyl-N,N-dimethyl-urea (e.g. DIURON TM) and dicyanodiamide (e.g. AMICURE TM CG 1200 from Pacific Anchor Chemical).

Suitable curing agents also include anhydrides, particularly polycarboxylic anhydrides, such as nadic anhydride, methylnadic anhydride, phthalic anhydride, tetrahydrophthalic anhydride, hexahydrophthalic anhydride, methyltetrahydrophthalic anhydride, endomethylenetetrahydrophtalic anhydride, and trimellitic anhydride.

The curable thermoset resin may also include, by way of example, ceramic microspheres and various flame retardants and smoke suppressants to impart specific flame retardant properties. Examples of such suppressants are metal oxide, alumina trihydrate (ATH), zinc borate such as Firebrake® ZB (commercially available from U.S. Borax Inc., Boron, California USA), ammonium polyphosphate, polyphosphazenes, phosphorous-modified epoxy. If present, the amount of the above mentioned additives may be up to 30% by weight based on total weight of the resin composition.

The curable thermoset resin may also include conductive additives to further improve the electrical conductivity of the curable protective prepreg material. The morphology of the additional conductive additives may include one or more of flakes, powders, fibers, wires, microspheres, nano-particles, singly or in combination. If present, the amount of the conductive additives may be up to 30% by weight based on total weight of the resin composition.

The term "nano-particles" as used herein, refers to materials having at least one dimension smaller than about 0.1 micrometer (<100 nanometers). Suitable nano-particles for the intended purpose herein include, but are not limited to, metallic nanowires, metal coated and not-metal coated carbon nano-tubes, carbon nano-fibers, carbon nano-ropes, carbon nano-ribbons, carbon nano-fibrils, carbon nano-sheets, carbon nano-rods, carbon nano-cones, and carbon nano-ohms, carbon black, graphite nano-platelets or nano-dots, graphenes, and other types of fullerene materials.

The curable thermoset resin may also include UV stabilizers and pigments such as TiO₂ to impart specific surfacing film features. If present, the amount of the above mentioned stabilizers and pigments may be up to 5% by weight based on total weight of the resin composition.

### Curable Composite Structure

Another aspect of the present disclosure is relating to a curable composite structure having the expandable, conductive fiber layer in the outermost portion.

In one embodiment, the protective prepreg material as described above is in contact with a curable composite material of fiber-reinforced resin, referred hereafter as "structural composite material". The term "structural composite material" encompasses composite materials containing reinforcement fibers infused or impregnated with a curable matrix resin. In some embodiments, the curable structural composite material is a prepreg ply or a layup of multiple prepreg plies arranged in a stacking sequence. The protective prepreg material may be laid up together with one or more prepreg plies to form a composite panel.

The reinforcement fibers of the structural composite material for the purposes herein include fibers with a high tensile strength, preferably greater than 500 ksi (or 3447 MPa). In preferred embodiments, the reinforcement fibers are carbon or graphite fibers. The reinforcement fibers may be in the form of continuous tows, each tow made up of multiple filaments, unidirectional or multidirectional fibers, tapes of unidirectional fibers, or nonwoven or woven fabrics. Moreover, the reinforcement fibers may be sized or unsized.

For applications in high-performance composite parts such as those in aerospace industry, the content of the reinforcement fibers in the structural composite material, e.g. prepreg ply, may be within the range 40% to 80% by weight, more preferably 55% to 75% by weight.

The curable matrix resin composition of the structural composite material may be the same as or different from that of the protective prepreg material. The thermoset resins and curing agents described above for the curable resin composition of the protective prepreg material are also suitable for the curable resin composition of the structural composite material.

In one embodiment, the curable composite structure is a composite panel having a top layer resulting from curing the protective prepreg material laminated to a structural prepreg ply or a layup of multiple structural prepreg plies. The structural prepreg plies are made of the structural composite material described above.

Curing of the composite material or prepreg layup disclosed herein is generally carried out at elevated temperature up to 200 °C, preferably in the range of 170 °C - 190 °C, and with use of elevated pressure to restrain deforming effects of escaping gases, or to restrain void formation, suitably at pressure of up to 10 bar (1 MPa), preferably in the range of 3 bar (0.3 MPa) to 7 bar (0.7 MPa). Preferably, the cure temperature is attained by heating at up to 5 °C/min, for example, 2 °C/min to 3 °C/min and is maintained for the required period of up to 9 h, preferably up to 6 h, for example between 2 h and 4 h. The use of a catalyst in the matrix resin may allow even lower cure temperatures. Pressure is released throughout, and temperature is reduced by cooling at up to 5 °C/min, for example, up to 3 °C/min.

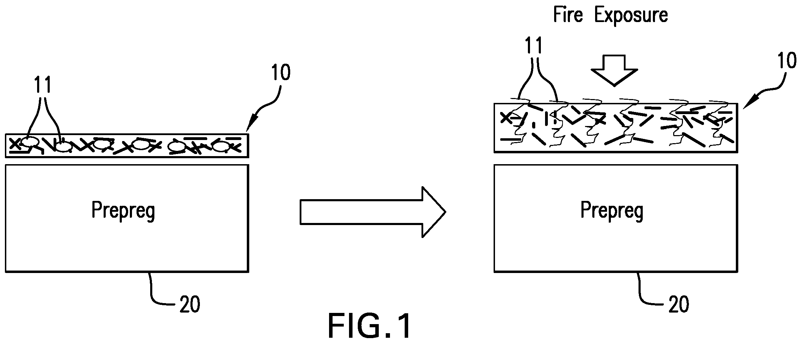

**FIG. 1** is a schematic illustration of an exemplary cured composite panel containing a top expandable, conductive prepreg layer 10 laying over a structural prepreg 20 before exposure to fire (left view) and after exposure to fire (right view). The top layer 10 contains conductive fibers and thermally expandable particles 11. The top layer 10 undergoes expansion if exposed to fire.

In some embodiments, the composite panel may contain an interlayer containing interlaminar toughening particles between the top layer 10 and the structural prepreg 20. Interlaminar toughening particles may include thermoplastic particles, e.g. particles made of polyamide, polyimide, and polyaryletherketone (PAEK); and elastomeric particles, e.g. particles made of polybutadiene, polyacrylic, polyacrylonitrile, polystyrene, and copolymers thereof.

The manufacturing method for the composite panel disclosed herein includes co-curing the protective prepreg material with the structural composite material to yield a final composite structure. It has been found that the addition of the thermally expandable, conductive prepreg material as the top/outermost protective layer on the structural composite material results in improved burn-through resistance as compared to a structural composite material having no protective layer.

The improvement of burn-through resistance may be evaluated by measuring the time for fire penetration and the back side temperatures of a composite panel during a burn-through test executed at 182 KW/m². A test for burn-through resistance is that the composite panel prevents fire penetration when exposed to a flame at 1100-1200 °C for at least 5 minutes. Additionally, the heat flow measured at a point 12 inches distant from the cold side of the composite panel should not exceed 22.7 KW/m².

Moreover, for structural components (e.g. skin, stringers, frames of airplanes), the measured back side temperatures of the composite panel should be lower than the critical temperature causing collapsing under a compression load, simulating loads in service. The burn-through resistance may be also measured by means of fire-under-compression load test to provide information about the ability of the composite panel to prevent the structural components from collapsing and the electrical systems and wires inside an airplane from falling onto the passengers. Such collapsing and falling of the airplane's parts may impede the passengers' evacuation in case of a burn-through accident.

It was found that the addition of the expandable, conductive protective layer as the top layer on a composite structure provides burn-through resistance that is greater than a thermally expandable top protective layer with non-conductive/insulating fibers, and also yields a better thermal insulation effect. This insulation effect is surprising since the addition of a conductive layer was not expected to provide temperatures lower than those resulting from having a top layer with insulating fibers.

It is believed that the combination of electrically conductive fibers and the thermally expandable particles plays a synergistic role under fire providing the rapid expansion of the top layer if exposed to flame.

In some embodiments, the top expandable, conductive protective layer on a composite panel provides a reduction in the "cold face" (or back side) peak temperature of the panel (during a burn-through test performed at 182 KW/m² for 5 minutes) of at least 150°C comparing to a similar panel without said top layer.

In some embodiments, the top expandable, conductive protective layer on a composite panel provides a reduction of the temperature at the back side at a distance of 4 inches from the panel (during a burn-through test performed at 182 KW/m² for 5 minutes) of at least 50°C, comparing to a similar panel without said top layer.

In some embodiments, a composite panel having the top expandable, conductive protective layer exhibits no fire penetration during a burn-through test performed at 182 KW/m² for 5 minutes, and the heat flux at the back side at a distance of 30 cm (12 inches) from the panel is lower than 7 KW/m².

It has been found that the addition of the top/outermost expandable, conductive layer provides improvement in time-to-failure in conditions simulating the combined effect of fire and compression loads as compared to a composite panel without such top layer. As such, the composite panel as disclosed herein is particularly suitable for use in primary structures (e.g. fuselage) of aircrafts, which are susceptible to fuel fire risks.

In some embodiments, the top layer provides improvement in the composite time-to-failure (under the condition of heat flux equal to 182 KW/m² and compression stress equal to 10 MPa) of about 2 minutes comparing to a similar panel without said top layer.

Additionally, it has been found that the addition of the top/outermost expandable, conductive layer provides lightning strike protection (LSP) and electromagnetic interference (EMI) shielding to the structural composite material.

Because no additional components such as woven wire mesh, solid or expanded metal foil, interwoven wire fabric are necessary, the use of the expandable, conductive layer in aerospace structures would be cost-effective and would not cause an increase in weight.

In one embodiment, a fiber-reinforced, thermally insulating material is interposed between the protective prepreg material as described above and a curable structural composite material comprised of carbon fibers impregnated with a curable matrix resin. The thermally insulating material contains non-conductive reinforcement fibers impregnated with a curable resin. The non-conductive reinforcement fibers are made of an insulating material and may be selected from polycrystalline fibers, such as high alumina polycrystalline fibers, refractory ceramic fibers such as alumino-silicate fibers, alumina-magnesia-silica fibers, mineral wool fibers, kaolin fibers, alkaline earth silicate fibers, such as calcia-magnesia-silica fibers and magnesia-silica fibers, S-glass fibers, S2-glass fibers, E-glass fibers, quartz fibers, silica fibers and combinations thereof. The thermoset resins and curing agents described above for the curable resin composition of the protective prepreg material and the structural composite material are also suitable for the curable resin composition of the thermally insulating material.

Preferably, the thermally insulating material is a single prepreg ply. The curable resin composition of this thermally insulating prepreg ply may be the same as or different from that of the protective prepreg material or that of the structural composite material.

In one embodiment, the curable composite structure is a composite panel having a top layer resulting from curing the protective prepreg material, an interleaving thermally insulating material and a structural prepreg ply or a layup of multiple structural prepreg plies. The structural prepreg plies are made of the structural composite material described above.

The non-conductive reinforcement fibers of the thermally insulating material may be in the form of continuous tows, each tow made up of multiple filaments, unidirectional or multidirectional fibers, tapes of unidirectional fibers, nonwoven or woven fabrics. Moreover, the non-conductive reinforcement fibers may be sized or unsized.

The thermally insulating material imparts additional burn-through resistance to the resulting final composite structure because it provides an insulating layer between the top protective prepreg and the structural composite material. The thermally insulating material may further include the same thermally expandable particles described above for the top protective layer to impart further burn-through resistance. In such case, the thermally expandable particles may be incorporated into the curable resin composition of the thermally insulating material.

The second curable composite material functions as an electrically insulation layer between the top electrically conductive protective layer and the carbon-fiber reinforced structural composite material, thus reducing the amount of electrical charges traveling inside the structural composite material in case of a lightning strike event.

According to another embodiment, the curable composite structure is a product derived from infusing or injecting a curable liquid resin into two or more fiber layers, wherein at least one fiber layer is the expandable, conductive fiber layer discussed above, and the other structural fiber layer(s) is/are layers of dry reinforcement fibers. The expandable, conductive fiber layer and the structural fiber layer(s) of dry reinforcement fibers may be combined together to form a dry preform suitable for infusing or injecting the curable liquid resin.

The structural fiber layer(s) of dry reinforcement fibres in the preform may be any type of textiles known in the prior art for manufacturing composite materials. Examples of suitable fabric types or configurations include, but are not limited to: all woven fabrics, examples are plain weave, twill weave, sateen weave, spiral weave, and uni-weave; all multiaxial fabrics, examples of which include, warp-knitted fabrics, and non-crimp fabrics (NCF); knitted fabrics; braided fabrics; all non-woven fabrics, examples of which include, but are not limited to, mat fabrics composed of chopped and/or continuous fibre filaments, felts, and combinations of the aforementioned fabric types. The reinforcement fibres in the preform are made of materials disclosed above in reference to structural composite material. In some embodiments, at least some of the structural fiber layers of dry reinforcement fibres in the preform are composed of carbon or graphite fibres.

The conductive fiber layer discussed above, and the other structural fiber layer(s) of dry reinforcement fibers may be slit to be suitable for use in an Automated Tape Laying (ATL) or Automated Fibre Placement (AFP) process.

ATL and AFP are processes that use computer-guided robotics to lay down successive layers of prepreg tapes or dry fibrous tapes onto a mold surface (e.g. a mandrel) to create a curable composite structure. Exemplary applications include aircraft wing skins and fuselages. The ATL/AFP process involves dispensing one or more tapes side by side onto a mandrel surface to create a layer of desired width and length, and then additional layers are built up onto a prior layer to provide a layup with a desired thickness. The ATL/AFP system may be equipped with a robotic placement head for dispensing and compacting prepreg tapes or dry fibrous tapes directly onto the mandrel surface.

In one embodiment, the conductive fiber layer is combined with one or more layers of structural unidirectional reinforcement fibres to form dry fibrous tapes that are suitable for use in ATL and AFP processes. In this case, the dry fibrous tapes having at the one site the said conductive fiber layer are laid down via ATL or AFP to form a preform that is configured for liquid resin infusion processes. The resulting preform comprising the said conductive fiber layer is highly permeable of curable resin compositions via liquid resin infusion processes. Liquid resin infusion processes that are suitable for this purpose include, but are not limited to, Resin Transfer Molding (RTM), Vacuum-assisted Resin Infusion (VARI) and Vacuum-assisted Resin Transfer Molding (VARTM).

The curable liquid resin composition may contain the thermoset resins and curing agents discussed above. An example of a suitable resin composition for resin infusion is that described in U.S. patent application with publication no. US 2011/0151232, assigned to Cytec Technology Corp. Examples of commercially available thermoset resins that are suitable for resin infusion are Cycom® 977-20, Cycom® 823, Prism® EP2400 available from Cytec Solvay Group.

### Applications

The compositions described herein can be used to manufacture cast or moulded structural materials, and are particularly suitable for fabrication of fiber-reinforced load-bearing or impact-resisting composite structures

The prepreg materials disclosed herein are applicable to the manufacture of components for transport applications, including aerospace, aeronautical, nautical, automotive, and railroad. For examples, the composite prepregs may be used for fabricating primary and secondary aircraft structures, space and ballistics structures. Such structural components include composite fuselage and wing structures. The composite prepregs disclosed herein also find utility in building and construction applications, as well as other commercial applications. Notably, the composite prepregs are particularly suitable for the fabrication of load-bearing or impact-resisting structures with burn-through resistance and lightning strike protection.

### EXAMPLES

In the following examples, the following procedures for burn-through test, fire-under-compression load test and lightning strike test were used.

### 1. Burn-through testing procedures

Tests were carried out using a propane burner as heat source calibrated using the flame temperature. To simulate a post-crash fire, the heat flux at the test panel's surface is fixed to 182 kW/m² with a flame temperature of about 1160°C.

A sheathed thermocouple (type N) was positioned closed to the test panel at the "hot face" (surface exposed to the flame) to monitor the flame temperature during the test. Three thermocouples type K were used to monitor the temperature profile of the "cold face" (backside that is not exposed to flame) in direct contact with the panel. An additional thermocouple and a heat flux (HF) detector were also positioned respectively at a distance of 10 cm (4 inches) and at a distance of 30 cm (12 inches) from panel to monitor the temperature and heat flux of the hot gasses above the panel during the test. Two video-cameras were used to detect fire penetration through the panel and to evaluate the panel response during the test.

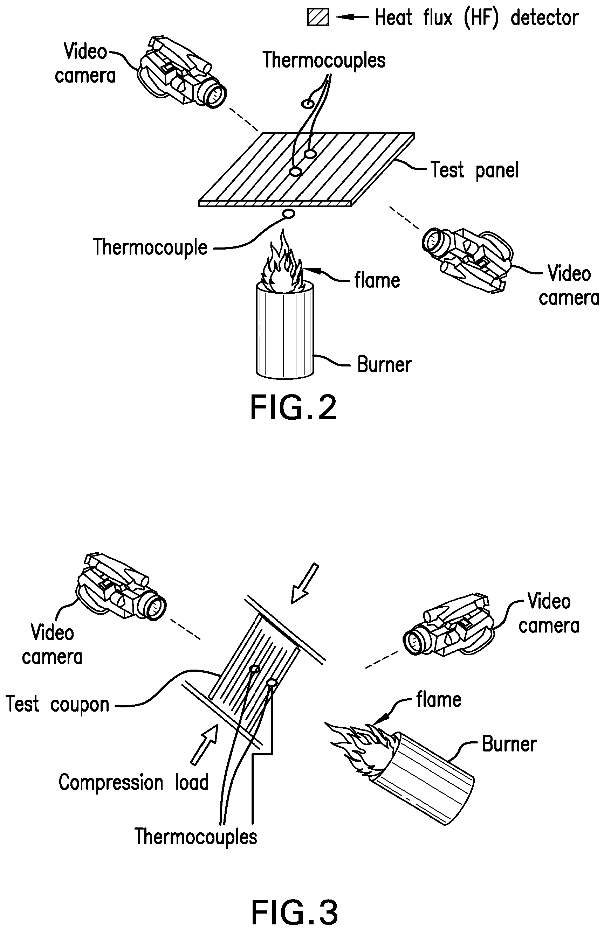

Burn-through tests were performed for 5 minutes, while temperatures at "hot face", "cold face" and at a distance of 10 cm (4 inches) from the panel were monitored. A schematization of the test set-up is shown in **FIG. 2**.

Tested panels were also visually inspected and results were evaluated according to the following damage level criteria:
5= panel severely damaged: cold face of the panel with > 50% of visible dry fibers
4= panel badly damaged: cold face with 40-50% of visible dry fibers.
3= panel damaged: cold face side with 20-40% of visible dry fibers
2= panel slight damaged: cold face with 10-20% of visible dry fibers
1= panel little damaged: cold face with no or less than 10% of visible dry fibers.

### 2. Fire-under-compression load testing procedures

The fire-under-compression load test requires a flame, characterized by a constant heat flux, impinging on a test coupon's surface on which a constant compressive load was applied. The load was applied using a hydraulic actuator capable of generating a constant pressure and therefore a constant load on to the coupon. Test was performed using the CAI fixture (ASTM D7137, 2012) to prevent buckling of the coupon.

Test coupon was inserted in the CAI fixture and the anti-buckling guides were put in place and tightened up according to ASTM D7137, 2012. Coupon dimensions were 10 x 15 cm (4 inch x 6 inch) according to ASTM D7137, 2012. Also, coupons were thermally insulated from the metallic CAI fixture.

During the test, a constant force and a constant heat flux equal to 182 KW/m² was applied on the coupon. Force was selected to apply a constant stress of 10 MPa. During the test the applied force was monitored to detect the time-to-failure. Time-to-failure was measured for each coupon and then measurements were averaged and standard deviation is calculated.

Two video-cameras were used to detect fire penetration through the coupon and to evaluate the coupon's response during the test. A schematization of the test set-up is shown in **FIG. 3****.**

### 3. Lightning strike testing procedures

To emulate the lightning strike (LS) damage on the aircraft composite structure, painted composite panels were subjected to lightning direct effect tests using Zone 1A (LS test for radome) or Zone 2A (LS test for most of fuselage sections) criteria. Each square test panel 55 x 55 cm (22 inches x 22 inches) was placed underneath an electrode, such that the Zone 1A or Zone 2A emulated strike would be at the center of the panel.

The panel was grounded around all four edges by the use of an aluminium picture frame which ensures that the current was extracted as symmetrically as possible. Current was injected into the center of the test panel by the use of a jet diverting electrode and 100mm long thin copper fuse wire. Two lightning waveforms were used throughout testing; Zone 1A and Zone 2A which are defined in ED-84 as having components A+B+C* and D+B+C* respectively. The individual components are defined below:
Zone 1A Components A+B+C*

| | |
|---|---|
| • Component A | Peak Current = 200kA ± 10%, |
| | Action Integral = 2.0 MJ/Ω ± 20% |
| • Component B | Average current = 2.0kA ± 20% , |
| | Charge Transfer = 10 Coulombs ±10%, |
| | Duration = 5ms |
| • Component C* | Charge Transfer = 18 Coulombs ± 20%, |
| | Duration = 45ms |

Zone 2A Components D+B+C*

| | |
|---|---|
| • Component D | Peak Current = 100kA ± 10%, |
| | Action Integral = 0.25 MJ/Ω ± 20% |
| • Component B | Average current = 2.0kA ± 20%, |
| | Charge Transfer = 10 Coulombs ±10%, |
| | Duration = 5ms |
| • Component C* | Charge Transfer = 18 Coulombs ± 20% |

Components A, B, and D were generated by capacitor banks which were discharged through series impedance into the test panels. Component C was generated by the partial discharge of a direct current (DC) battery bank with the discharging duration controlled by a cutout fuse.

Results were evaluated according to the following damage level criteria:
5= panel severely damaged, hole through the sample
4= panel badly damaged, all plies delaminated, splitting to back face
3= panel damaged, most plies delaminated, no damage or slight warping to back face
2= panel slight damaged, top plies delaminated, no damage to back face
1= panel little damaged, vaporization of the top layer, top ply delaminated only

Damage area was also evaluated by Ultrasonic scanning.

### Example 1

### Thermally expandable fiber layers

Two thermally expandable and electrically conductive fiber layers were manufactured by a wet-laying process, each fiber layer containing Copper and Nickel coated carbon fibers (45 weight %), thermally expandable graphite flakes (45 weight %), and acrylic latex binder (10 weight %).

Copper and Nickel coated carbon fibers were chopped to a dimension in the range 10 - 20 mm before the wet-laying process. The expandable, conductive fiber layers were manufactured by forming an aqueous slurry of copper and nickel coated chopped carbon fibers, expandable graphite flakes and acrylic latex binder, depositing the slurry onto a water-pervious support, withdrawing water from the slurry to form a sheet, and then drying the sheet to a moisture content of less than 5% by weight. The expandable graphite flakes used have an onset temperature of 220°C and have a particle size of 350 microns (65% on U.S. 50 mesh nominal).

For comparison purpose one thermally expandable fiber layer with non-electrically fibers was manufactured by a similar wet-laying process, containing Basalt fibers (45 weight %), thermally expandable graphite flakes (45 weight %) and acrylic latex binder (10 weight %).

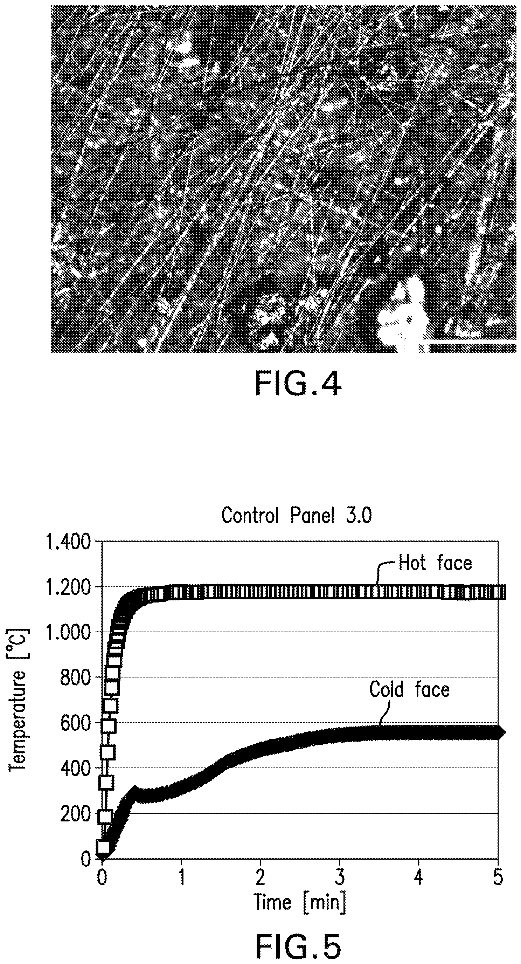

The composition and areal weight of the resulting thermally expandable fiber layers are shown in **Table 1.** **FIG. 4** is a micrograph of Fiber layer 1.2, top view.

**TABLE 1. Thermally expandable fiber layers description.**

| | ***Areal weight*** | ***Description*** | ***Chopped fibers*** |
|---|---|---|---|
| **Comparative Fiber layer 1.0** | 150 gsm | Thermally expandable mat with non-electrically conductive fibers | Basalt fibers (45 weight %) |
| **Fiber layer 1.1** | 75 gsm | Thermally expandable mat with electrically conductive fibers | Ni/Cu coated carbon fibers (45 weight %) |
| **Fiber layer 1.2** | 150gsm | Thermally expandable mat with electrically conductive fibers | Ni/Cu coated carbon fibers (45 weight %) |

### Example 2

### Protective prepreg materials

A resin composition was prepared according to the formulation shown in **Table 2**.

**TABLE 2. Resin composition used for protective prepreg materials manufacturing**

| ***Components*** | ***Supplier*** | ***Weight** %* |
|---|---|---|
| Araldite® PY306CH (Bisphenol-F based epoxy resin) | Huntsman Advanced Materials | 26.3 |
| Araldite® MY0510CH (triglycidyl ethers of p-aminophenol) | Huntsman Advanced Materials | 26.3 |
| PES 5003P TY2 (polyethersulphone) | Sumitomo | 21.1 |
| Aradur 9664-1 (4,4' Diaminodiphenylsulfone) | Huntsman Advanced Materials | 26.3 |

The resin composition was used to form two resin films having film weight of 125 gsm and 63 gsm. The resin films were formed using a KROENERT film coater. Each resin film was then used to impregnate each of the expandable, conductive fiber layers 1.1 and 1.2 disclosed in Example 1. The resin film having an areal weight equal to 125 gsm was also used to impregnate the comparative fiber layer 1.0 disclosed in Example 1. The properties of the resulting thermally expandable prepreg materials are described in **Table 3**.

**TABLE 3. Thermally expandable prepregs description.**

| | ***Fiber layer* code** | ***Description*** | ***Fiber areal weight*** | ***Resin film weight*** | ***Resin content (weight* %)** | ***Total prepreg areal weight*** |
|---|---|---|---|---|---|---|
| ***Comparative Prepreg 2.0*** | Comparative 1.0 | Thermally expandable prepreg with non-conductive fibers | 150gsm | 125 gsm | 45% | 275 gsm |
| ***Prepreg 2.1*** | 1.1 | Thermally expandable prepreg with conductive fibers | 75 gsm | 63 gsm | 45% | 138 gsm |
| ***Prepreg 2.2*** | 1.2 | Thermally expandable prepreg with conductive fibers | 150 gsm | 125 gsm | 45% | 275 gsm |

### Example 3

### Panel with Comparative Lightning Strike protective top layer

A resin composition was prepared according to the formulation shown in **Table 4.**

**TABLE 4. Resin composition used for structural prepreg plies manufacturing.**

| ***Components*** | ***Supplier*** | ***Weight** %* |
|---|---|---|
| Araldite® PY306CH (Bisphenol-F based epoxy resin) | Huntsman Advanced Materials | 23.1 |
| Araldite® MY0510CH (triglycidyl ethers of p-aminophenol) | Huntsman Advanced Materials | 23.1 |
| PES 5003P TY2 (polyethersulphone) | Sumitomo | 18.4 |
| Vestamid Terra (polyamide 10,10) | Evonik | 12.0 |
| Aradur 9664-1 (4,4' Diaminodiphenylsulfone) | Huntsman Advanced Materials | 23.4 |

Vestamid Terra is particulate polyamide 10,10 commercially available from Evonik, which is insoluble upon curing in the resin composition.

The resin composition was then used to produce a unidirectional (UD) prepregs using a hot melt impregnation process. Resin films were produced by coating the resin composition onto a release paper. Next, two of such resin films were laminated onto both sides of a continuous layer of unidirectional carbon fibers (UTS50 E13 12K 800tex from Toho Tenax, USA), under the aid of heat and pressure, to form a structural prepreg having a fiber areal weight (FAW) equal to 134gsm and a resin content equal to 35% by weight.

A control cured composite panel (**Control panel 3.0**) having a dimension of 34.3 x 34.3 cm (13.5 inches x 13.5 inches) was manufactured for burn-through test, by laying up 8 structural prepreg plies according with the stacking sequence [+,-,0,90]₁ₛ. Curing occurred in autoclave at 180°C for 2 hours under 0.55 MPa (80 psi) pressure.

**FIG. 5** shows, for Control panel 3.0, the measured temperatures during a burn-through test as a function of time at the panel "hot face" (fire exposed surface) and panel "cold face" (panel back side). During the test, the temperature on the "hot face" of the panel was about 1160°C. Results indicate that panel temperature rises quickly as a function of time, reaching 480°C in about 2 min at the "cold face". Such high temperature would be catastrophic if this occurred in the inner part of the fuselage causing a failure of structural components (such as the frames) under low loads and no protection for interior systems and passengers.

A comparative panel (**Comparative Panel 3.1**) was manufactured co-curing said 8 structural prepreg plies with a top protective surfacing layer made with SM 905 M.045 ECS 015 commercially available from Cytec Solvay Group. SM 905 M.045 ECS 015 is a surfacing film with expanded copper screen (ECS) and passed lightning strike tests performed by Lightning Technologies Inc., including those for aircraft zones 1A and 1B, and has been qualified by several airframe manufacturers.

**Table 5** shows the comparative panel temperatures as a function of time at "cold face" during a burn-through test. Results indicate that the addition of said protective top layer does not provide burn-through protection to the composite panel.

**TABLE 5. Burn-through results for example with comparative LS protective top layer.**

| | ***Top layer*** | ***T*_{"*cold face" after 1 min*}** | ***T*_{"*cold face" after 2 min*}** | ***T*_{"*cold face" after 4 min*}** | ***Tmax _{"cold face"}*** | ***Tair at 4"*** | ***HF at 12"*** | ***Damage level*** |
|---|---|---|---|---|---|---|---|---|
| ***Control 3.0*** | None | 310°C | 477°C | 555°C | 556°C | 201°C | not measured | 5 |
| ***Comparative Panel 3.1*** | SM 905 M.045 ECS 015 | 424°C | 488°C | 563°C | 564°C | 200°C | Not measured | 5 |

Example 3 shows that the comparative Lightning Strike protective top layer is not suitable for improving burn-through resistance comparing to a panel having no protective layer.

### Example 4

### Panel with Comparative expandable, non-conductive top fiber layer

The comparative prepreg 2.0 disclosed in Table 3 was co-cured as a top layer with 8 prepreg plies, which were laid up according with the stacking sequence: [+,-,0,90]₁ₛ. The 8 prepreg plies were manufactured in the same manner as described above for control panel 3.0. Co-curing occurred in an autoclave at 180°C for 2 hours under 0.55 MPa (80 psi) pressure. The resulting cured composite panel (**Comparative Panel 4.0**) was subjected to the same burn-through test mentioned above for Control panel 3.0.

Burn-through test results are reported in **Table 6**. The addition of a top protective layer containing thermally expandable graphite flakes and non-electrically conductive (or electrically insulating) basalt fibers provides a limited improvement in the composite burn-through protection and no lightning strike protection.

### Example 5

### Panels with the expandable, conductive top fiber layer

### Burn-through comparison test results

Prepreg 2.1 disclosed in Table 3 was co-cured as a top layer with 8 plies of prepreg plies, which were laid up according with the stacking sequence: [+,-,0,90]₂ₛ, for manufacturing **Panel 5.a1** for burn-through tests. The 8 prepreg plies were manufactured in the same manner as described above for control panel 3.0. Co-curing occurred in an autoclave at 180°C for 2 hours under 0.55 MPa (80 psi) pressure.

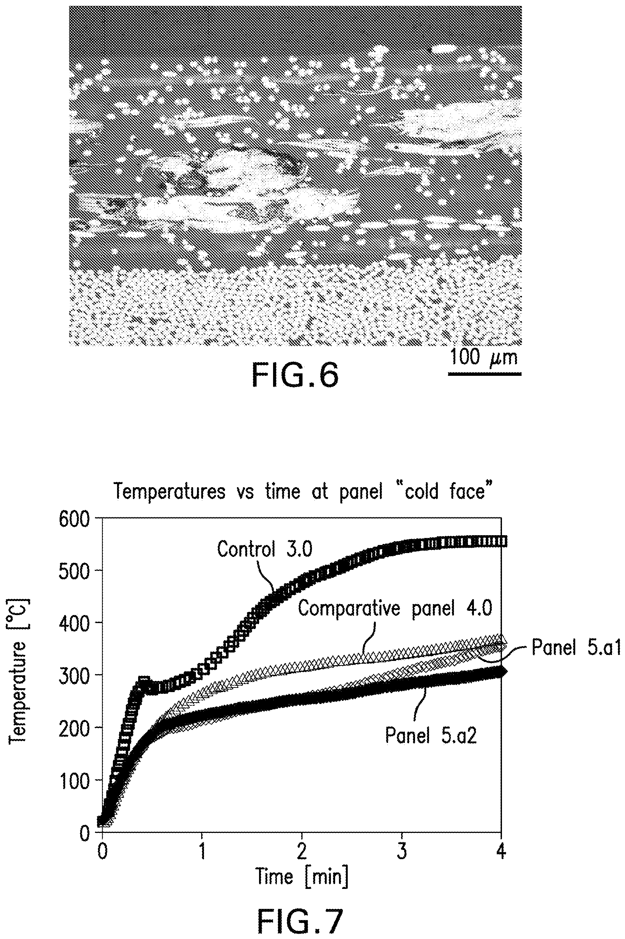

**Panel 5.a2** was manufactured in the same manner as described for Panel 5.a1 except that Prepreg 2.2 disclosed in Table 3 was used as the top layer. **FIG. 6** is a micrograph showing the cross-section view of the top layer of cured Panel 5.a2. The top layer contained the combination of copper/ nickel coated carbon fibers and thermally expandable graphite flakes.

Both Panel 5.a1 and Panel 5.a2 were subjected to the burn-through test mentioned above for Control panel 3.0 and for comparative Panel 4.0. Burn-through test results for all panels are reported in Table 6.

**TABLE 6. Panels description and burn-through test results.**

| | ***Top layer*** | ***T*_{"*cold face" after 1 min*}** | ***T*_{"*cold face" after 2 min*}** | ***T*_{"*cold face" after 4 min*}** | ***Tmax _{"cold face"}*** | ***Tair at 4"*** | ***HF at 12"*** | ***Damage level*** |
|---|---|---|---|---|---|---|---|---|
| ***Control 3.0*** | None | 310°C | 477°C | 555°C | 556°C | 201°C | not measured | 5 |
| ***Comparative Panel 4.0*** | Thermally expandable with non-conductive fibers (150gsm) | 264°C | 316°C | 368°C | 388°C | 148°C | 7.0 KW/m² | 3 |
| ***Panel 5.a1*** | Thermally expandable with conductive fibers (75gsm) | 211°C | 255°C | 353°C | 374°C | 108°C | 6.5 KW/m² | 2 |
| ***Panel 5.a2*** | Thermally expandable with conductive fibers (150gsm) | 221°C | 253°C | 305°C | 320°C | 106°C | 6.3 KW/m² | 1 |

**FIG. 7** shows the burn-through results as temperatures vs. time at "cold face".

It was found that the addition of a top protective layer composed of the copper and nickel coated carbon fibers and the expandable graphite flakes provided a significant improvement in the burn-through resistance.

The following results were found comparing Panel 5.a2 and Comparative panel 4.0 having similar top layers, equal weight, the same expandable graphite flakes but composed of different fibers:
- Temperature at the "cold face" was about 50-70°C lower for Panel 5.a2 as compared to Comparative panel 4.0.
- Peak air temperature at a distance of 10 cm (4 inches) from the panel's "cold face" was about 40°C lower for Panel 5.a2 as compared to Comparative panel 4.0.

As such, the presence of an expandable layer with electrically conductive fibers provides a thermal insulation effect greater than an expandable layer with non-electrically conductive (or insulating) fibers. This insulation effect is surprising since the addition of a conductive layer was not expected to provide temperatures lower than those resulting from having a similar top layer with insulating fibers.

This insulation effect is very surprising comparing the data between the expandable layer with conductive metal coated carbon fibers and a similar layer with insulating and high temperature resistant fibers such as the basalt fibers.

### Fire-under-compression load comparison test results

Prepreg 2.1 disclosed in Table 3 was co-cured as a top layer with 32 prepreg plies, which were laid up according with the stacking sequence: [+,0,-,90]₄ₛ. The 32 prepreg plies were manufactured in the same manner as described above for control panel 3.0. Co-curing occurred in an autoclave at 180°C for 2 hours under 0.55 MPa (80 psi) pressure. From the resulting cured composite panel (**Panel 5.b1**) 6 coupons having a dimension of 4 inches x 6inches were extracted for fire-under-compression load test.

**Panel 5.b2** was manufactured in the same manner as described for Panel 5.b1 except that Prepreg 2.2 disclosed in Table 3 was used as the top layer. **Control panel 5.b0** was manufactured in the same manner as described for Panels 5.b1 and 5.b2 except that no top protective layer was used.

Fire-under-compression load test results are reported in **Table 7**. A panel with no top protective layer has a limited time-to-failure under the combination of heat flux of 182 KW/m² and compression load. The addition of the top protective layer provided up to about 2 minutes improvement of the time-to-failure.

**TABLE 7. Panels description and compression under fire test results.**

| | ***Top layer*** | ***Time-to-failure [sec]*** |
|---|---|---|
| ***Control 5.b0*** | None | 82±5 |
| ***Panel 5.b1*** | Thermally expandable and electrically conductive (75gsm) | 146±16 |
| ***Panel 5.b2*** | Thermally expandable and electrically conductive (150gsm) | 190±20 |

### Lightning strike comparison test results

A square test panel (**Panels 5.c1_2A**), having a dimension of 55 x 55 cm (22 inches x 22 inches), was manufactured co-curing Prepreg 2.1 disclosed in Table 3 as a top layer with 16 prepreg plies, which were laid up according with the stacking sequence: [+,-,0,90]₂ₛ. The 16 prepreg plies were manufactured in the same manner as described above for control panel 3.0. Co-curing occurred in an autoclave at 180°C for 2 hours under 0.55 MPa (80 psi) pressure.

A square test panel (**Panels 5.c2_1A**) was manufactured in the same manner as described for Panel 5.c1 except that Prepreg 2.2 disclosed in Table 3 was used as the top layer. Two **Control panels 5.c0_2A** and **5.c0_1A** were manufactured in the same manner as described for Panels 5.c1_2A and 5.c2_1A except that no top protective layer was used.

Prior to lightning strike tests all the panels were coated applying firstly an Epoxy primer with a uniform dry film thickness of 1 mil (25.4 µm) and then a white gloss Urethane top coat Enamel with a uniform dry uniform film thickness of 3 mil (76.2 µm).

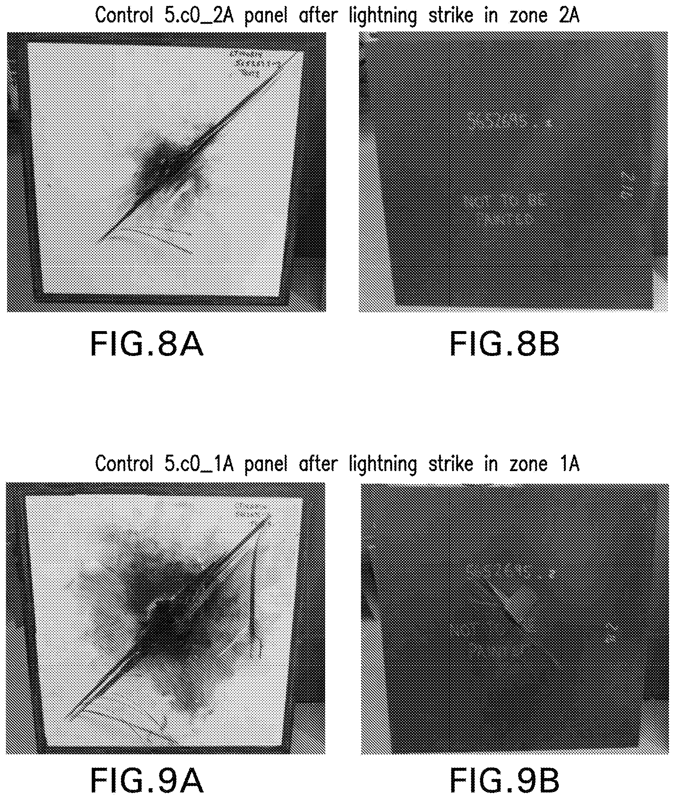

**FIGS. 8A and 8B** show front and back images, respectively, of Control 5.c0_2A panel after LS in zone 2A. **FIGS. 9A and 9B** show front and back images, respectively, of Control 5.c0_1A panel after LS in zone 1A.

As can be seen from Table 8 and **FIGS. 8A, 8B, 9A and 9B****,** a panel with no top protective layer is considerably damaged by a zone 1A and zone 2A simulated strikes. Damage is throughout the panel which would be catastrophic if this occurred during an actual strike.

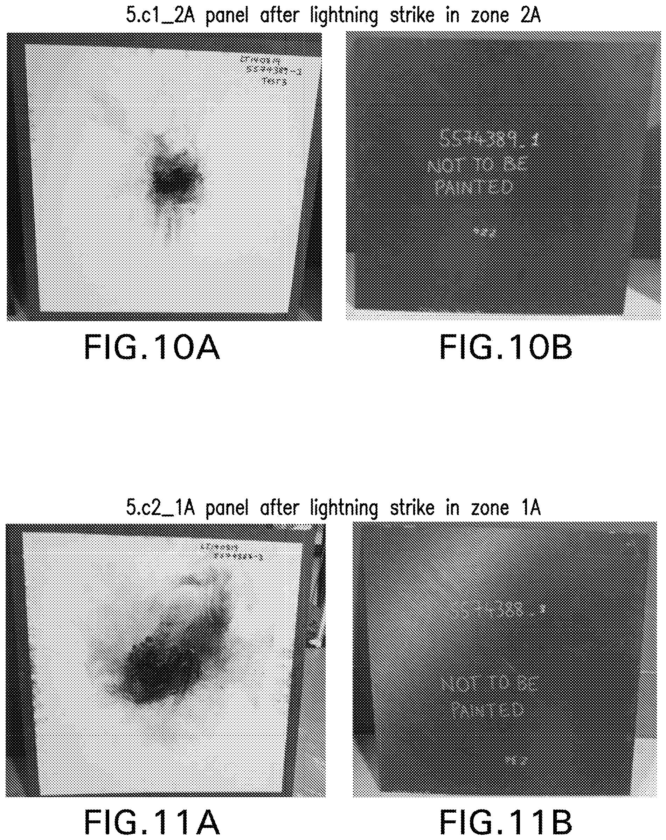

**FIGS. 10A** and **10B** show front and back images, respectively, of 5.c1_2A panel after LS in zone 2A. **FIGS. 11A** and **11B** show front and back images, respectively, of 5.c2_1A panel after LS in zone 1A.

As can be seen from Table 8 and **FIGS. 10A, 10B, 11A**, and **11B**, the addition of the top protective layer comprising the expandable, conductive fiber layer has dramatically reduced the damage from a zone 2A and zone 1A simulated strike. No puncture occurred and no visible damage at the rear was detected.

**TABLE 8. Panels description and LS test results.**

| | *Top layer* | *Component A or D* | | *Components B* + *C** | ***Results*** | ***Damage level*** |
|---|---|---|---|---|---|---|
| | | *Injected Current* | *Action integral* | *Charge Transfer* | | |
| | | *kA* | *X10⁶A²s* | *Coulomb* | | |
| ***Control 5.c0_2A*** | None | 99.9 | *0.22* | 27.3 | ***No Puncture*** | 3 |
| | | | | | ***Front:** Splitting and delamination over an area of 56cmx4cm, Tufting of the CFC 7cmx3cm* | |
| | | | | | ***Rear:** No Visible damage* | |
| | | | | | ***Damage area**: 81 cm²* | |
| ***Control 5.c0_1A*** | None | *195.1* | *1.89* | 26.1 | ***Punctured*** | 5 |
| | | | | | ***Front:** Splitting and delamination over an area of over 60cmx5cm, Tufting of the CFC 14cmx8cm* | |
| | | | | | ***Rear:** Splitting and delamination over an area of 30cmx18cm* | |
| | | | | | ***Damage area:** 277 cm²* | |
| ***Panels 5.c1_2A*** | Thermally expandable and electrically conductive (75gsm) | *101.3* | *0.23* | 27.5 | ***No Puncture*** | 1 |
| | | | | | *Front: Vaporisation of the top coating 5cmx7cm, Tufting of the CFC 6cmx3cm* | |
| | | | | | ***Rear:** No Visible Damage* | |
| | | | | | *Damage area: 25 cm²* | |
| ***Panels 5.c2_1A*** | Thermally expandable and electrically conductive (150gsm) | 192.9 | *1.88* | 25.7 | ***No Puncture*** | 3 |
| | | | | | ***Front:** Vaporisation of the top coating 12cmx10cm, Tufting of the CFC 10cmx6cm* | |
| | | | | | ***Rear:** No Visible Damage* | |
| | | | | | *Damage area: not measured* | |

### Example 6

### Method of manufacturing by resin infusion a panel having a top protective layer

The Fiber layer 1.2 disclosed in example 1 was laid up as top fiber layer on 8 plies of unidirectional Non Crimp Fabrics (NCF) of IMS60 carbon fibers 214gsm available from SAERTEX GmbH & Co.KG, Saerbeck, Germany according with the stacking sequence: [+,0,-,90]₁ₛ. Then the resulting dry preform was infused at 90°C and under vacuum with the resin Prism® EP2400 available from Cytec Solvay Group. Curing occurred in an oven at 180°C for 2 hours. Burn-through test was executed on the resulting panel (**Panel 6.1**).

A Control panel (**Control Panel 6.0**) was manufactured in the same manner as described for Panel 6.1 except that no top fiber layer was added to the staking sequence. Results in **Table 9** show that the addition of a top protective layer provides a significant improvement in the burn-through resistance.

**TABLE 9. Panels description and burn-through test results.**

| | ***Top layer*** | ***T*_{"*cold face" after 1 min*}** | ***T*_{"*cold face" after 2 min*}** | ***T*_{"*cold face" after 4 min*}** | ***Tₘₐₓ "cold face"*** | ***Tₐᵢᵣ at 4"*** | ***HF at 12"*** | ***Damage level*** |
|---|---|---|---|---|---|---|---|---|
| ***Control Panel 6.0*** | None | 348°C | 445°C | 501°C | 519°C | 138°C | 10.1 KW/m² | 5 |
| ***Panel 6.1*** | Thermally expandable and electrically conductive (150gsm) | 290°C | 351°C | 399°C | 409°C | 107°C | 6.6 KW/m² | 2 |

### Example 7

### Method of manufacturing by AFP and by resin infusion a panel having a top protective layer

A thermally expandable and electrically conductive fiber layer was manufactured by a wet-laying process according to the process described in Example 1. The thermally expandable and electrically conductive fiber layer contained copper and nickel coated carbon fibers (40 weight %), thermally expandable graphite flakes (40 weight %), and acrylic latex binder (20 weight %) and had a total areal weight of 135 gsm with 5% tolerance.

The conductive fiber layer was then laid up as a top fiber layer on a dry fiber preform manufactured by AFP. The fiber preform was manufactured by automatically laying down unidirectional fiber tapes of IMS65 carbon fibers (PRISM® TX1100 supplied by Cytec Solvay Group) so as to form a preform consisted of 8 plies with the stacking sequence: [+,0,-,90]1s. Next, the resulting dry preform having the thermally expandable, electrically conductive fiber layer on top was infused at 90°C and under vacuum with the resin Prism® EP2400 available from Cytec Solvay group. Curing was then carried out in an oven at 180°C for 2 hours.

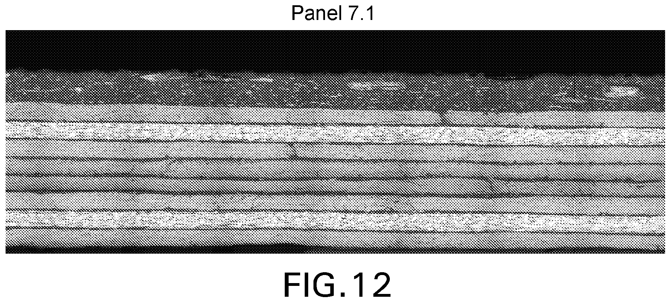

The resulting panel (**Panel 7.1**) had a resin content of about 33.9% by weight and a cured panel thickness of 1.61 mm. A micrograph of the panel's cross-section is shown in **FIG. 12**.

## Claims

1. A thermally expandable and electrically conductive material capable of providing lightning strike protection and burn-through resistance, comprising:
(A) electrically conductive fibers;
(B) thermally expandable particles (11); and
(C) a curable matrix resin comprising one or more thermoset resins, preferably, one or more epoxy resins,
wherein the electrically conductive fibers and the thermally expandable particles (11) are embedded in the curable matrix resin,
**characterized in that**
the thermoset resin component of the curable matrix resin constitutes from 30% to 50% of the resin by weight.

2. The thermally expandable and electrically conductive material of claim 1, wherein the electrically conductive fibers are in the form of a non-woven mat of randomly arranged fibers, and the thermally expandable particles are incorporated into or dispersed throughout said mat, thereby forming a fiber layer.

3. The thermally expandable and electrically conductive material of claims 1 or 2, wherein the fiber layer has an areal weight in the range of 50 gsm and 350 gsm.

4. The thermally expandable and electrically conductive material according to any one of the preceding claims, wherein the electrically conductive fibers are chopped fibers.

5. The thermally expandable and electrically conductive material according to claim 4, wherein the chopped fibers are carbon fibers, preferably, metal-coated carbon fibers.

6. The thermally expandable and electrically conductive material according to any one of the preceding claims, wherein the thermally expandable particles will start to expand in size when heated to an onset expansion temperature above a curing temperature of the curable matrix resin, and wherein the onset expansion temperature is 20°C to 100°C above the curing temperature of the curable matrix resin.

7. The thermally expandable and electrically conductive material according to any one of the preceding claims, wherein the thermally expandable particles are expandable graphite flakes, and wherein the expandable graphite flakes will start to expand in size when heated to an onset expansion temperature in the range of 200°C to 250°C.

8. The thermally expandable and electrically conductive material according to any one of the preceding claims, wherein the curable resin composition further comprises conductive particles.

9. A method for manufacturing a thermally expandable and electrically conductive prepreg material (10, 20), said method comprising:
forming a nonwoven mat from a slurry comprising electrically conductive fibers, thermally expandable particles (11), and a binder, by a wet-laying process;
**characterized by**
a resin film from a curable resin composition comprising one or more thermoset resins and a curing agent;
pressing the resin film against one surface of the nonwoven mat while applying heat to soften the resin film and to infuse or impregnate the nonwoven mat with the resin.

10. A curable composite structure comprising:
the thermally expandable and electrically conductive material according to any one of claims 1 to 9 in contact with at least one curable prepreg ply, said prepreg ply comprising continuous reinforcement fibers that have been infused or impregnated with a curable resin.

11. The curable composite structure of claim 10, wherein the at least one curable prepreg ply is a layup of multiple prepreg plies arranged in a stacking sequence, and the thermally expandable and electrically conductive material together with the layup of prepreg plies form a composite panel in which the thermally expandable and electrically conductive material is the top or outermost layer or near the top of the curable composite structure.

12. The curable composite structure of claim 10 or 11, wherein the reinforcement fibers of the curable prepreg ply are carbon fibers in the form of continuous, unidirectionally aligned fibers.

13. The curable composite structure according to any one of claims 10 to 12 further comprising an insulating composite layer between the thermally expandable and electrically conductive material and the at least one curable prepreg ply,
wherein said insulating composite layer comprises non-conductive reinforcement fibers impregnated with a curable resin, and optionally, thermally expandable particles dispersed therein, and
wherein the reinforcement fibers of the curable prepreg ply are continuous carbon fibers.

14. The curable composite structure of claim 13, wherein the non-conductive reinforcement fibers are made of an insulating material and may be selected from: polycrystalline fibers, refractory ceramic fibers, mineral wool fibers, kaolin fibers, alkaline earth silicate fibers, S-glass fibers, S2-glass fibers, E-glass fibers, quartz fibers, silica fibers and combinations thereof.

15. The curable composite structure of claim 10 or 11, wherein the reinforcement fibers are in the form of continuous, unidirectionally aligned fibers or woven fabrics.

16. The thermally expandable and electrically conductive material of claim 1, wherein:
- the electrically conductive fibers are in the form of a nonwoven mat;
- the thermally expandable particles are incorporated into or dispersed throughout the mat, thereby forming a thermally expandable and electrically conductive fiber layer; and
- the fiber layer also contains a small amount of polymeric binder in sufficient amount to hold the fibers together and to maintain the integrity of the mat.

## Patentansprüche

1. Thermisch expandierbares und elektrisch leitfähiges Material, das zur Bereitstellung von Blitzschlagschutz und Durchbrennresistenz in der Lage ist, das Folgendes umfasst:
(A) elektrisch leitfähige Fasern;
(B) thermisch expandierbare Teilchen (11); und
(C) ein härtbares Matrixharz, das eine oder mehrere wärmehärtende Harze, vorzugsweise ein oder mehrere Epoxidharze, umfasst,
wobei die elektrisch leitfähigen Fasern und die thermisch expandierbaren Teilchen (11) in dem härtbaren Matrixharz eingebettet sind,
**dadurch gekennzeichnet, dass** die wärmehärtende Harzkomponente des härtbaren Matrixharzes 30 Gew.-% bis 50 Gew.-% des Harzes ausmacht.

2. Thermisch expandierbares und elektrisch leitfähiges Material nach Anspruch 1, wobei die elektrisch leitfähigen Fasern in Form einer Vliesmatte aus zufällig angeordneten Fasern vorliegen und die thermisch expandierbaren Teilchen in die Matte eingearbeitet oder darin dispergiert sind, wodurch eine Faserschicht gebildet wird.

3. Thermisch expandierbares und elektrisch leitfähiges Material nach den Ansprüchen 1 oder 2, wobei die Faserschicht ein Flächengewicht im Bereich von 50 gsm und 350 gsm aufweist.

4. Thermisch expandierbares und elektrisch leitfähiges Material nach einem der vorhergehenden Ansprüche, wobei es sich bei den elektrisch leitfähigen Fasern um geschnittene Fasern handelt.

5. Thermisch expandierbares und elektrisch leitfähiges Material nach Anspruch 4, wobei es sich bei den geschnittenen Fasern um Kohlefasern, vorzugsweise metallbeschichtete Kohlefasern, handelt.

6. Thermisch expandierbares und elektrisch leitfähiges Material nach einem der vorhergehenden Ansprüche, wobei die thermisch expandierbaren Teilchen dann mit der Größenausdehnung beginnen, wenn sie auf eine Anfangsausdehnungstemperatur erwärmt werden, die oberhalb einer Härtungstemperatur des härtbaren Matrixharzes liegt, und wobei die Anfangsausdehnungstemperatur 20 °C bis 100 °C oberhalb der Härtungstemperatur des härtbaren Matrixharzes liegt.

7. Thermisch expandierbares und elektrisch leitfähiges Material nach einem der vorhergehenden Ansprüche, wobei es sich bei den thermisch expandierbaren Teilchen um expandierbare Graphitflocken handelt und wobei die expandierbaren Graphitflocken dann mit der Größenausdehnung beginnen, wenn sie auf eine Anfangsausdehnungstemperatur im Bereich von 200 °C bis 250 °C erwärmt werden.

8. Thermisch expandierbares und elektrisch leitfähiges Material nach einem der vorhergehenden Ansprüche, wobei die härtbare Harzzusammensetzung ferner leitfähige Teilchen umfasst.

9. Verfahren zur Herstellung eines thermisch expandierbaren und elektrisch leitfähigen Prepregmaterials (10, 20), wobei das Verfahren Folgendes umfasst:
Bilden einer Vliesmatte aus einer elektrisch leitfähige Fasern, thermisch expandierbare Teilchen (11) und ein Bindemittel umfassenden Aufschlämmung durch ein Nasslegeverfahren, **dadurch gekennzeichnet, dass** ein Harzfilm aus einer härtbaren Harzzusammensetzung, die ein oder mehrere wärmehärtenden Harze und ein Härtungsmittel umfasst, gebildet wird;
der Harzfilm gegen eine Oberfläche der Vliesmatte gedrückt wird, während Wärme zum Erweichen des Harzfilms und zum Durchdringen oder Imprägnieren der Vliesmatte mit dem Harz angewendet wird.

10. Härtbare Verbundstruktur, die Folgendes umfasst:
das mit mindestens einer härtbaren Prepreglage in Kontakt stehende thermisch expandierbare und elektrisch leitfähige Material nach einem der Ansprüche 1 bis 9,
wobei die Prepreglage kontinuierliche Verstärkungsfasern umfasst, die von einem härtbaren Harz durchdrungen oder damit imprägniert sind.

11. Härtbare Verbundstruktur nach Anspruch 10, wobei es sich bei der mindestens einen härtbaren Prepreglage um ein Laminat von mehreren in einer Stapelfolge angeordneten Prepreglagen handelt und das thermisch expandierbare und elektrisch leitfähige Material zusammen mit dem Laminat aus Prepreglagen eine Verbundplatte bildet, bei der das thermisch expandierbare und elektrisch leitfähige Material die oberste bzw. äußerste Schicht ist oder nahe der Oberseite der härtbaren Verbundstruktur ist.

12. Härtbare Verbundstruktur nach Anspruch 10 oder 11, wobei es sich bei den Verstärkungsfasern der härtbaren Prepreglagen um Kohlefasern in Form von kontinuierlichen, unidirektional ausgerichteten Fasern handelt.

13. Härtbare Verbundstruktur nach einem der Ansprüche 10 bis 12, die ferner eine Isolierverbundschicht zwischen dem thermisch expandierbaren und elektrisch leitfähigen Material und der mindestens einen härtbaren Prepreglage umfasst,
wobei die Isolierverbundschicht nicht leitfähige Verstärkungsfasern, die mit einem härtbaren Harz imprägniert sind, und gegebenenfalls darin dispergierte thermisch expandierbare Teilchen umfasst, und
wobei es sich bei den Verstärkungsfasern der härtbaren Prepreglage um kontinuierliche Kohlefasern handelt.

14. Härtbare Verbundstruktur nach Anspruch 13, wobei die nicht leitfähigen Verstärkungsfasern aus einem Isoliermaterial hergestellt sind und aus:
polykristallinen Fasern, feuerfesten Keramikfasern, Mineralwollfasern, Kaolinfasern, Erdalkalimetallsilicatfasern, S-Glasfasern, S2-Glasfasern, E-Glasfasern, Quarzfasern, Siliciumdioxidfasern und Kombinationen davon ausgewählt sind.

15. Härtbare Verbundstruktur nach Anspruch 10 oder 11, wobei die Verstärkungsfasern in Form von kontinuierlichen, unidirektional ausgerichteten Fasern oder Geweben vorliegen.

16. Thermisch expandierbares und elektrisch leitfähiges Material nach Anspruch 1, wobei:
- die elektrisch leitfähigen Fasern in Form einer Vliesmatte vorliegen;
- die thermisch expandierbaren Teilchen in der Matte dispergiert oder darin eingearbeitet sind, wodurch eine thermisch expandierbare und elektrisch leitfähige Faserschicht gebildet wird; und
- die Faserschicht auch eine kleine Menge polymeres Bindemittel in einer Menge enthält, die zum Zusammenhalten der Fasern und zum Erhalt der Integrität der Matte ausreichend ist.

## Revendications

1. Matériau thermiquement expansible et électriquement conducteur pouvant apporter une protection contre le foudroiement et une résistance aux brûlures perforantes, comprenant :
(A) des fibres électriquement conductrices ;
(B) des particules thermiquement expansibles (11) ; et
(C) une résine de matrice durcissable comprenant une ou plusieurs résines thermodurcissables, de préférence une ou plusieurs résines époxy,
dans lequel les fibres électriquement conductrices et les particules thermiquement expansibles (11) sont incorporées dans la résine de matrice durcissable, **caractérisé en ce que**
le constituant résine thermodurcissable de la résine de matrice durcissable constitue de 30 % à 50 % en poids de la résine.

2. Matériau thermiquement expansible et électriquement conducteur de la revendication 1, dans lequel les fibres électriquement conductrices se présentent sous la forme d'un mat non tissé de fibres disposées aléatoirement, et les particules thermiquement expansibles sont incorporées à l'intérieur ou dispersées à travers ledit mat, formant ainsi une couche de fibres.

3. Matériau thermiquement expansible et électriquement conducteur de la revendication 1 ou 2, dans lequel la couche de fibres a un poids surfacique dans la gamme de 50 g/m² à 350 g/m².

4. Matériau thermiquement expansible et électriquement conducteur selon l'une quelconque des revendications précédentes, dans lequel les fibres électriquement conductrices sont des fibres coupées.

5. Matériau thermiquement expansible et électriquement conducteur selon la revendication 4, dans lequel les fibres coupées sont des fibres de carbone, de préférence des fibres de carbone enrobées de métal.

6. Matériau thermiquement expansible et électriquement conducteur selon l'une quelconque des revendications précédentes, dans lequel les particules thermiquement expansibles commenceront à voir leur taille augmenter lorsqu'elles seront chauffées jusqu'à une température de début d'expansion au-dessus d'une température de durcissement de la résine de matrice durcissable, et dans lequel la température de début d'expansion est 20 °C à 100 °C au-dessus de la température de durcissement de la résine de matrice durcissable.

7. Matériau thermiquement expansible et électriquement conducteur selon l'une quelconque des revendications précédentes, dans lequel les particules thermiquement expansibles sont des paillettes de graphite expansible, et dans lequel les paillettes de graphite expansible commenceront à voir leur taille augmenter lorsqu'elles seront chauffées jusqu'à une température de début d'expansion dans la gamme de 200 °C à 250 °C.

8. Matériau thermiquement expansible et électriquement conducteur selon l'une quelconque des revendications précédentes, dans lequel la composition de résine durcissable comprend en outre des particules conductrices.

9. Procédé de fabrication d'un matériau préimprégné thermiquement expansible et électriquement conducteur (10, 20), ledit procédé comprenant :
la formation d'un mat non tissé à partir d'une suspension comprenant des fibres électriquement conductrices, des particules thermiquement expansibles (11) et un liant, par un procédé de couchage humide, **caractérisé par**
la formation d'un film de résine à partir d'une composition de résine durcissable comprenant une ou plusieurs résines thermodurcissables et un durcisseur ;
la pression du film de résine contre une surface du mat non tissé tout en appliquant de la chaleur pour ramollir le film de résine et pour infuser ou imprégner le mat non tissé avec la résine.

10. Structure composite durcissable comprenant :
le matériau thermiquement expansible et électriquement conducteur selon l'une quelconque des revendications 1 à 9 en contact avec au moins une couche de préimprégné durcissable, ladite couche de préimprégné comprenant des fibres de renforcement continues qui ont été infusées ou imprégnées avec une résine durcissable.

11. Structure composite durcissable de la revendication 10, dans laquelle l'au moins une couche de préimprégné durcissable est un empilement de multiples couches de préimprégné agencées dans une séquence d'empilement, et le matériau thermiquement expansible et électriquement conducteur, conjointement avec l'empilement de couches de préimprégné, forme un panneau composite dans lequel le matériau thermiquement expansible et électriquement conducteur est la couche de dessus ou la plus à l'extérieur ou près du dessus de la structure composite durcissable.

12. Structure composite durcissable de la revendication 10 ou 11, dans laquelle les fibres de renforcement de la couche de préimprégné durcissable sont des fibres de carbone sous la forme de fibres continues, alignées unidirectionnellement.

13. Structure composite durcissable selon l'une quelconque des revendications 10 à 12 comprenant en outre une couche composite isolante entre le matériau thermiquement expansible et électriquement conducteur et l'au moins une couche de préimprégné durcissable, dans laquelle ladite couche composite isolante comprend des fibres de renforcement non conductrices imprégnées avec une résine durcissable, et éventuellement des particules thermiquement expansibles dispersées à l'intérieur, et
dans laquelle les fibres de renforcement de la couche de préimprégné durcissable sont des fibres de carbone continues.

14. Structure composite durcissable de la revendication 13, dans laquelle les fibres de renforcement non conductrices sont constituées d'un matériau isolant et peuvent être choisies parmi : les fibres polycristallines, les fibres céramiques réfractaires, les fibres de laine minérale, les fibres de kaolin, les fibres de silicate alcalino-terreux, les fibres de verre S, les fibres de verre S2, les fibres de verre E, les fibres de quartz, les fibres de silice et les combinaisons de celles-ci.

15. Structure composite durcissable de la revendication 10 ou 11, dans laquelle les fibres de renforcement se présentent sous la forme de fibres continues, alignées unidirectionnellement, ou de tissus.

16. Matériau thermiquement expansible et électriquement conducteur de la revendication 1, dans lequel :
- les fibres électriquement conductrices se présentent sous la forme d'un mat non tissé ;
- les particules thermiquement expansibles sont incorporées à l'intérieur ou dispersées à travers le mat, formant ainsi une couche de fibres thermiquement expansibles et électriquement conductrices ; et
- la couche de fibres contient également une petite quantité de liant polymère en quantité suffisante pour maintenir les fibres ensemble et pour préserver l'intégrité du mat.
